# EUROPEAN PATENT SPECIFICATION

(11) **EP 4 541 630 B1**
(45) Date of publication and mention of the grant of the patent: **08.07.2026**
(21) Application number: 24207179.3
(22) Date of filing: 17.10.2024
(51) Int. Cl.: B60K 17/16, F16H 57/04, B60K 1/00, F16H 57/02

(54) **IMPROVED ELECTRIC TRACTION AXLE**
VERBESSERTE ELEKTRISCHE ACHSE
ESSIEU DE TRACTION ÉLECTRIQUE AMÉLIORÉ

(30) Priority: 20.10.2023 IT 202300021987
(43) Date of publication of application: 23.04.2025
(73) Proprietor: FPT Industrial S.p.A., 10156 Torino (IT)
(72) Inventor: PESOLA, Fabio, 10156 TORINO (IT); TESSITORE, Marco, 10156 TORINO (IT); CANTONE, Francesco, 10156 TORINO (IT); ESPOSITO, Pietro, 10156 TORINO (IT); COLACITO, Emanuele, 10156 TORINO (IT); FEOLA, Domenico, 10156 TORINO (IT)
(74) Representative: Studio Torta S.p.A.

(56) References cited:
- EP-A1- 0 587 389
- JP-A- 2007 290 656
- JP-A- 2011 158 100
- US-A- 5 845 732
- US-A1- 2017 254 396
- US-A1- 2017 261 082

## Description

### TECHNICAL SECTOR

This invention relates to an electric traction axle,

### PRIOR ART

As known, there is an increasing need to reduce polluting emissions due to internal combustion engines used to operate vehicles, in particular to enable their traction.

This need is even greater for Light Commercial Vehicles (LCV), Medium Commercial Vehicles (MCV), or Heavy Commercial Vehicles (HCV), such as lorries, as well as motor vehicles in general.

To this end, there are known solutions: e-axles or e-beams, i.e. electric traction axles or beams, wherein the axle/beam supports one or more electric machines configured to exchange torque with the drive shafts of the axle and, therefore, with the wheels, to provide or generate power as a function of the vehicle's use.

More specifically, it should be noted that the axle is the component that connects the two wheel hubs that perform a support function only, while a beam is the component that connects the two wheel hubs where there are also drive shafts and the differential unit and an input point for traction torque.

Examples of these e-axles are illustrated in the patents US2022/0250457 A1, US 2020/0282827 A1 and US2022/0065334 A1.

These solutions involve the use of electric machines in a so-called "on-axis" configuration where, in other words, the axis of the electric machine is coaxial to the axis of the axle/beam drive shafts.

This configuration, though advantageous in terms of assembling the elements directly on the axles themselves, is particularly disadvantageous in terms of the dimensions along this axial direction.

In fact, the positioning of the electric machine, which is particularly bulky, limits the positioning of other functional elements, unless the longitudinal dimension of the axle is increased.

Since it is not always possible, due to the dimensions of components already present on the axle (suspension, brake system components, frame components, the axle track limit, etc.), to increase this extension, the transmission connecting the electric machine to the wheels or the electric machine itself must be resized, thus actually decreasing the power and performance available to the axle or beam.

Thus, the versatility of torque and power provision over an extended interval, an essential feature for providing an e-axle or e-beam that can be used in diverse vehicle operating conditions, is undermined.

US2017/254396 A1 discloses an electric traction axle for a vehicle that comprises a casing defining a space separated from the external environment and one electric machine and a pair of drive shafts each connected to a respective wheel of said vehicle and supported by said casing, said drive shafts being coaxial to a longitudinal axis, said at least one electric machine being coaxial to an axis parallel to and spaced apart from said longitudinal axis, said e-axle comprising a transmission chain housed in said space operationally connecting said at least one electric machine to said pair of drive shafts, said transmission chain comprising operationally interposed in series between said at least one electric machine and said pair of drive shafts a first transfer system, a second transfer system and a differential unit, said e-axle comprising a lubrication system for said transmission chain, said lubrication system being placed in series with one of said drive shafts, where said lubrication system includes at least one lubrication pipe made internally to said one of said drive shafts, said lubrication pipe is fluidly connected to at least one source of lubricating fluid, said source being carried by said casing, where said lubrication pipe comprises a first branch and a second branch, said first branch being fluidly connected to said source, said second branch defining a plurality of lubrication points along a longitudinal axis of said one of said drive shafts, said lubrication system comprises a plurality of lubrication branches extending radially starting from said second branch, said lubrication branches defining lubrication points for said elements of said transmission chain.

Examples of further known arrangements are disclosed in US2017/261082 A1, EP0587389 A1, US5845732 A, JP2011158100 A or JP2007290656 A.

There is, thus, a need to provide e-axles or e-beams that may have reduced dimensions, while maintaining as extended an operational range, in terms of torque and power, as possible to fulfil various vehicle operating conditions.

The purpose of this invention is to meet the needs outlined above in an optimal and inexpensive way.

### SUMMARY OF THE INVENTION

The above-mentioned purpose is achieved with an electric traction axle according to claim 1. The dependent claims show further advantageous embodiments of the invention.

### BRIEF DESCRIPTION OF THE DRAWINGS

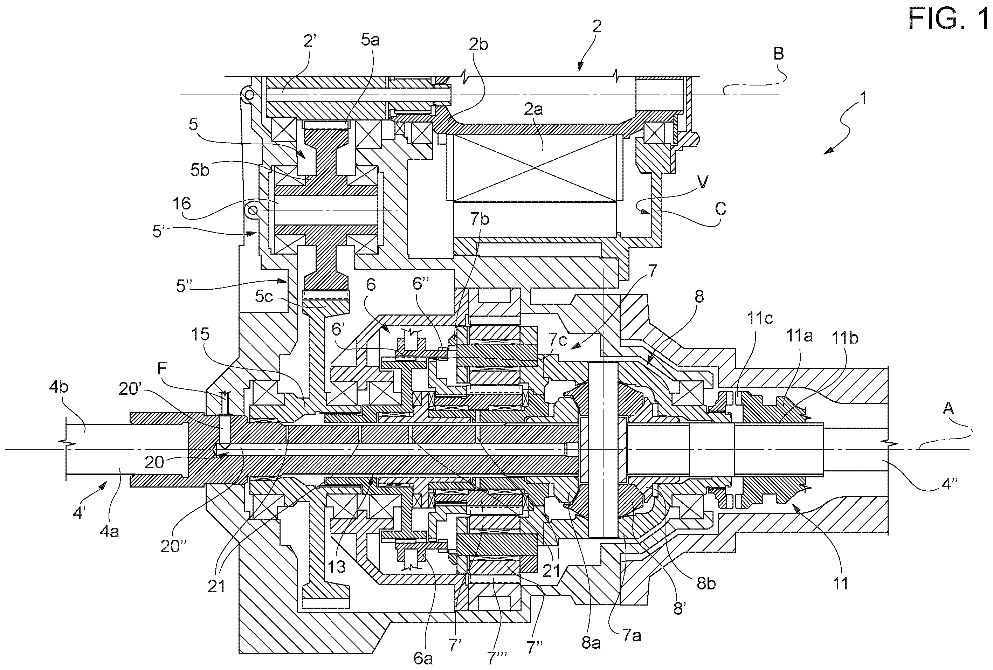

For a better understanding of this invention, a preferred embodiment is described below by way of non-limiting example and with reference to the accompanying drawing, Figure 1, representing a schematic, cross-section view of an electric traction axle according to the invention.

### DETAILED DESCRIPTION OF THE INVENTION

For simplicity, the expression axle/beam or e-axle/e-beam will be used below to avoid repetitions, since the invention can be applied to both architectures.

Figure 1 illustrates a portion of electric axle/beam 1, or e-axle/e-beam, comprising an electric machine 2 and a pair of wheels (not illustrated) supported by drive shafts 4', 4'' of the electric axle 1 according to the invention.

The electric machine 2, as known, is electrically connected to a power source, such as a battery pack (not illustrated) of the vehicle and is configured to exchange power with this, in particular receiving it to generate torque for the wheels or introducing it into the electric machine, receiving torque from the wheels.

According to the invention, the electric axle/beam 1 comprises, in sequence, a first transfer system 5, a second transfer system 7, and a differential unit 8 between the electric machine 2 and the wheels.

The term "transfer system" means a system for changing the torque/speed between the input and output that may have a larger, smaller, or equal ratio at either the input or the output. Advantageously, the second transfer system 7 is designed as a reducer.

Advantageously, a speed ratio change system 6 between the first transfer system 5 and the second transfer system 7 may be included.

The term "transfer system" means a system for changing the torque/speed between the input and output that may have a larger, smaller, or equal ratio at either the input or the output. Advantageously, the second transfer system 7 is designed as a reducer.

The differential unit 8 is placed between the drive shafts 4', 4'' that may be respectively connected to the wheels by means of a wheel hub transfer system (optional and not illustrated).

Optionally, there may be a differential lock system 11 placed between the differential unit 8 and one of the drive shafts 4', 4'' and, as an additional option, there may be a parking brake system (not illustrated) configured to operationally cooperate with either the second transfer system 7 or the differential unit 8 to lock the movement of the electric axle 1.

Between the wheels 6 and the differential unit 8, there may also, optionally, be a disconnection system 14 creating a connection or opening of one of the two drive shafts making vehicle towing possible by actually disconnecting at least one electric machine 2 and the transmission chain upstream of the differential unit 8.

With reference to Figure 1, and according to the invention, the axle/beam 1 comprises a casing C defining an inner space V designed to house the first transfer system 5, the speed ratio change system 6, the second transfer system 7, and the differential unit 8, as well as part of the drive shafts 4', 4".

In particular, the electric machine 2 comprises a stator 2a supported so it is fixed to the casing C of the axle 1 and a rotor 2b cooperating with the stator 2a as known. According to the invention, the electric machine 2 is coaxial to an axis B that is parallel to and spaced apart from a longitudinal axis A of the axle 1, i.e. coaxial to the drive shafts 4', 4".

This configuration, where the axes A, B are separate and parallel will be defined as "off-axis configuration" below for brevity.

The operating shaft 2' of the electric machine 2 connected to the rotor 2b is operationally connected by means of the first transfer system 5 to an input shaft 15.

Advantageously, the input shaft 15 is freely rotationally supported with respect to one of the two drive shafts 4', 4"; for simplicity, in this description, reference will be made to the left drive shaft 4' although it is clear that what is described could be reversed, in a mirror-like way, between the left and right drive shaft.

Advantageously, the first transfer system 5 defines at least one transmission ratio between the input shaft 15 and the operating shaft 2'. Specifically, in the embodiment, this transmission ratio is defined by two speed jumps 5', 5" defined by respective gears.

In particular, the transfer system comprises a first gear 5' defined by a first toothed gear 5a rigidly supported by the operating shaft 2', a second toothed gear 5b, meshing with the first and rigidly supported by a support shaft 16, and the second gear 5" comprises a third toothed gear 5c rigidly supported by the input shaft 15 and meshing with the second toothed gear 5b.

Clearly, though not illustrated, additional gear configurations can be applied such as, for example, there is a fourth gear wheel firmly connected in rotation to the second gear wheel 5b and meshing with the third gear wheel 5c.

The second transfer system 7 is advantageously produced as an epicyclic gear assembly thus comprising a sungear 7', multiple satellites 7'', and a crown 7‴.

The sungear 7' is advantageously supported by the left drive shaft 4' and, as known, meshes with multiple satellites 7", which, in turn, mesh with the crown 7‴ that is rigidly supported by a portion of the casing C. The satellites 7 are supported together by pins connected to a carrier 7a.

Advantageously, the input shaft 15 can be connected to either the carrier 7a or the sungear 7' thanks to the speed ratio change system 6.

In the embodiment described, the speed selection gearbox 6 essentially comprises a sleeve 6a defining a first and second toothing 6', 6".

Advantageously, the first toothing 6' is configured to cooperate sliding, thus defining a grooved coupling with the input shaft 15 along the axis A. This movement is adjusted by actuator devices W produced as pneumatic, hydraulic, or electric actuators designed to move the sleeve along the axis A.

As a function of the movement along the axis A first described, the second toothing 6" can cooperate, respectively, with toothing 7b rigidly supported by the carrier 7a or with toothing 7c rigidly supported by the sungear 7' or, alternatively, with neither (idle configuration).

The differential unit 8 is, advantageously, of the type with conical gears and comprises, as known, multiple satellites 8' driven by the carrier 7a and meshing with a pair of bevel wheels 8a, 8b rigidly supported by the left drive shaft 4' and the right drive shaft 4".

The differential lock system 11 is, as known, configured to lock the action of the differential unit 8, firmly connecting the two drive shafts 4', 4" by connecting one of the two drive shafts 4', 4'' with the differential unit container.

In the embodiment illustrated, the differential lock system 11 essentially comprises a sleeve 11a supported so as to slide along the axis A from the right drive shaft 4'' by means of a toothed connection 11b, such as a grooved one, which can be moved thanks to the action of the actuator means W, similar to those previously described.

The sleeve 11a also defines toothing 11c configured to selectively cooperate as a function of its movement along the axis A with toothing formed on one portion 17 integral with the box of the differential unit 8 and the carrier 7a.

The wheel hub transfer system 9, if present, may be produced according to necessity and in different ways and, therefore, is not further described for brevity.

Similarly, the parking brake system mentioned can be produced in different forms and on different operating portions of the axle/beam 1 and, therefore, is not further described for brevity.

According to the invention, the lubrication system 13 is interposed between/integrated with one of the drive shafts 4', 4'' and configured to provide lubricating fluid to the reduction systems 5, 7 mentioned above, to the gear change assembly 6 (if included), and to the differential unit 8.

As a result, the lubrication system 13 is interposed between/integrated with the drive shaft 4', 4'' surrounded by the reduction systems 5, 7 and gear change assembly 6 (if included) thus, in the embodiment described, between the differential unit 8 and the left drive shaft 4'.

According to the invention, one of said drive shafts 4', 4" comprises a first portion 4a and a second portion 4b connected to the wheel hub transfer system (if included) rigidly connected between them; in particular the bevel wheel 8a is supported by the first portion 4a.

Specifically, the lubrication system 13 is integrated into the first portion 4a, i.e. interposed in sequence between the differential unit 8 and the first portion 4a of the drive shaft 4'.

According to the invention, the lubrication system comprises at least one lubrication pipe 20 made internally to the first portion 4a.

According to the invention, the lubrication pipe 20 comprises a first branch 20' fluidically connected to one (or more) source F of lubricating fluid, for example a fluidic rotary joint made in the casing C and a second branch 20" connected to the first branch 20'.

Specifically, the second branch 20" extends parallel to the axis A, and, thus, coaxially to it, and is open, at one end, at the end of the first portion 4a and, thus, inside the differential unit 8. The first branch 20' instead extends radially, advantageously perpendicularly, to the second branch 20" on the opposite side to the open end of the differential unit 8.

According to the invention, the lubrication system 20 also comprises a plurality of lubrication branches 21 extending radially starting from the second branch 20" and spaced apart on them along the longitudinal axis A and defining respective lubrication points for the first and second transfer system 5, 7 and the gear change assembly 6 (if included).

In other words, the lubrication branches 21 are open and facing the first and second transfer system 5, 7 and the gear change assembly (if present) at one of their first ends, while at the other end, they are connected to the second branch 20".

In the embodiment described, the lubrication branches 21 are made on the same side of the first branch 20' and are all substantially coplanar. In any case, it is clear that they could be made positioned angularly offset circumferentially around the axis A and in a different number to that illustrated.

According to the invention, the second branch 20" and/or the lubrication branches 21 comprise a calibrated restriction, for example at their end, configured to better dose and direct the lubricant towards the components that they target.

In particular, it should be noted how these calibrated restrictions may have different sizes and, similarly, the through cross sections of the second branch 20" or of the lubrication branches 21 may have different dimensions or may vary to provide flows of different lubricating fluid to the different elements they face.

In particular, the second branch 20' or the lubrication branches 21 have a through cross section that is, preferably, cylindrical or conical in order to impress even components with an axial force with oil as a function of the centrifugal effects triggered by the rotation of the drive shaft 4'.

The operation of the embodiment of the electric traction axle/beam 1 according to the embodiment of the invention described above is the following.

In a first operating condition, wherein the electric machine 2 acts as an electric motor, it provides torque to the first transfer system 5 that transfers the torque, preferably increasing its value and, therefore, reducing the rotation speed, to the input shaft 15. Depending on the position of the sleeve 6a, the torque is directly transferred to the carrier 7a and, thus, to the differential unit 8 or additionally altered in value by means of transfer between the sungear 7' and satellites 7". From the differential unit 8, as known, it is divided between the drive shafts 4', 4" and, thus, by means of the wheel hub transfer systems to the wheels 3 (if included). The differential unit may be locked by means of the differential lock system 11.

In a second operating configuration, wherein the electric machine 2 acts as an electric generator, the torque is provided by the wheels 3 driven by the motion of the vehicle and follows the same transmission chain previously described, in the opposite direction, up to the electric machine 2 that, therefore, generates electricity with the torque received as input.

In both operating configurations, the lubrication system 13 provided by the source F of lubricating fluid, rotating, enables lubrication of the gears of the first and second transfer system 5, 7 of the gear change assembly 6 (if included) and of the differential unit 8. The lubricating fluid actually passes from the source (or sources) F towards the lubrication branches 21 providing, in rotation around the axis A, lubricating oil to the gears facing the lubricating point.

From the above, the advantages of an electric traction axle according to the invention are clear.

Thanks to the lubrication system interposed within the transmission between one of the drive shafts, it is possible to directly lubricate from inside the gears of the e-axle/e-beam transmission.

In particular, thanks to the interposition of the distributor 13 between one of the drive shafts, it is possible to provide a system that adapts itself to the rotation speed of the drive shaft, also exploiting the effects of the centrifugal forces that are produced with the rotation.

Again, it is possible to provide multiple lubrication points without complex, bulky piping potentially exposed to damage and breakages.

In combination with the structure of the transmission described, it is, thus, possible to provide an e-axle/e-beam with reduced longitudinal dimensions while also maintaining a high level of torque/power that can be delivered by the electrified transmission.

Thanks to good lubrication, again, it is possible to reduce wear on transmission elements and, therefore, increase their fatigue life, also decreasing losses due to friction and losses due to wasting oil by means of reduced, targeted lubrication thus improving the overall efficiency of the transmission system.

Lastly, it is clear that modifications and variations may be made to the electric traction axle according to this invention, without however departing from the scope of protection defined by the claims.

Clearly, the epicyclic mechanisms described may be assembled or arranged differently compared to what has been described, as with the other gears and selectors.

Similarly, actuators and wheel hub transfer systems (if included) may be produced differently

Again, as explained, the lubrication branches could be arranged differently, like the lubrication pipe/pipes or the number of lubricating fluid sources.

## Claims

1. An electric traction axle, e-axle/e-beam, (1) for a vehicle, e-axle/e-beam (1) comprising a casing (C) defining a space (V) separated from the external environment and at least one electric machine (2) and a pair of drive shafts (4', 4") each connected to a respective wheel of said vehicle and supported by said casing (C), said drive shafts (4', 4") being coaxial to a longitudinal axis (A),
said at least one electric machine (2) being coaxial to an axis (B) parallel to and spaced apart from said longitudinal axis (A),
said e-axle (1) comprising a transmission chain housed in said space (V) operationally connecting said at least one electric machine (2) to said pair of drive shafts (4', 4"),
said transmission chain comprising operationally interposed in series between said at least one electric machine (2) and said pair of drive shafts (4', 4") a first transfer system (5), a second transfer system (7) and a differential unit (8),
said e-axle (1) comprising a lubrication system (13) for said transmission chain, said lubrication system (13) being placed in series with one of said drive shafts (4', 4"),
wherein one of said drive shafts (4', 4") includes a first portion (4a) and a second portion (4b) rigidly connected to each other, said first portion (4a) being connected to said differential unit (8), said lubrication system (13) being made in said first portion (4a),
wherein said lubrication system (13) includes at least one lubrication pipe (20) made internally to said first portion (4a),
wherein said lubrication pipe (20) is fluidly connected to at least one source (F) of lubricating fluid, said source (F) being carried by said casing (C),wherein said lubrication pipe (20) comprises a first branch (20') and a second branch (20"), said first branch (20') being fluidly connected to said source (F), said second branch (20") defining a plurality of lubrication points along a longitudinal axis (A) of said first portion (4a),
wherein said lubrication system (13) comprises a plurality of lubrication branches (21) extending radially starting from said second branch (20") said lubrication branches (21) defining lubrication points for said elements of said transmission chain, said lubrication branches (21) and/or said lubrication pipe (20) defining a calibrated restriction.

2. The E-axle/ E-beam according to claim 1, said lubrication system (13) being integrated into one of said drive shafts (4', 4").

3. The E-axle/E-beam according to claim 1 or 2, further comprising a speed ratio change system (6) interposed in series between said transfer systems (5, 7).

4. The E-axle/ E-beam according to any of the preceding claims, wherein said second branch (20") extends along said longitudinal axis (A) of said first portion (4a) and is connected at a first end to said first branch (20') and at a second end opposite to the first it is opened and faces said differential unit (8).

5. The E-axle/ E-beam according to any of the preceding claims, wherein said lubrication branches (21) are spaced apart from each other along said longitudinal axis (A).

6. The E-axle/ E-beam according to any of the preceding claims, wherein said lubrication branches (21) are coplanar.

7. The E-axle/E-beam according to any of the preceding claims, wherein said lubrication branches (21) are placed on the same side with respect to said longitudinal axis (A).

8. The E-axle/E-beam according to one of the preceding claims, wherein said lubrication branches (21) and/or said lubrication pipe (20) have passage sections different from each other.

9. The E-axle/E-beam according to one of the previous claims, in which said electric machine (2) drives an operating shaft (2') operationally connected by said first transfer system (5) to an input shaft (15) carried in a rotationally free manner by one of said drive shafts (4', 4") and operationally connected to said second transfer system (7) via said speed ratio change system (6), said first transfer system (5) being a parallel shaft transfer system defining at least one speed jump (5', 5") between said operating shaft (2') and said input shaft (15).

10. The E-axle/E-beam according to one of the previous claims, in which said second transfer system (7) has epicyclic gears, comprising a sungear (7'), a crown (7‴) and a plurality of satellites (7") meshing between said sungear (7') and said crown (7‴) and connected by a carrier (7a), said carrier (7a) being operationally connected to said differential unit (8).

11. The E-axle according to one of the previous claims dependent on claim 3, wherein said speed ratio change system (6) is configured to connect said input shaft (15) with one of said sungear (7') or said carrier (7a) or to disconnect said input shaft (15) from said second transfer system (7).

12. The E-axle/E-beam according to one of the previous claims, in which said differential unit (8) includes a plurality of satellites (8') driven by said second transfer system (7) and meshing with a first and a second bevel wheel (8a, 8b) carried by a respective drive shaft (4', 4").

13. The E-axle according to one of the previous claims, comprising a differential lock system (11) configured to inhibit the torque distribution function of said differential unit (8).

14. The E-axle/E-beam according to one of the previous claims, further comprising wheel hub transfer systems (9) operationally interposed between each wheel (3) and the respective drive shaft (4', 4").

15. The E-axle/E-beam according to one of the previous claims, further comprising a parking brake system (12) configured to cooperate operationally with at least one of the second transfer system (7) and/or the differential unit (8) to block the movement of said E-axle/E-beam (1).

16. The E-axle/ E-beam according to one of the previous claims, comprising a system for disconnection of said drive shafts (4', 4").

17. A vehicle provided with an E-axle/E-beam according to one of the previous claims.

## Patentansprüche

1. Elektrische Traktionsachse, E-Achse/E-Träger, (1) für ein Fahrzeug, wobei die E-Achse/der E-Träger (1) ein Gehäuse (C), das einen von der äußeren Umgebung getrennten Raum (V) definiert, und zumindest eine elektrische Maschine (2) und ein Paar Antriebswellen (4', 4") umfasst, die jeweils mit einem jeweiligen Rad des Fahrzeugs verbunden und durch das Gehäuse (C) gestützt bzw. getragen sind, wobei die Antriebswellen (4', 4") koaxial zu einer Längsachse (A) sind,
wobei die zumindest eine elektrische Maschine (2) koaxial zu einer Achse (B) ist, die parallel zu und beabstandet von der Längsachse (A) ist,
wobei die E-Achse (1) eine in dem Raum (V) untergebrachte Übertragungskette umfasst, welche die zumindest eine elektrische Maschine (2) betriebsmäßig mit dem Paar Antriebswellen (4', 4") verbindet,
wobei die Übertragungskette, betriebsmäßig in Reihe zwischen der zumindest einen elektrischen Maschine (2) und dem Paar Antriebswellen (4', 4") angeordnet, ein erstes Übertragungssystem (5), ein zweites Übertragungssystem (7) und eine Differenzialeinheit (8) umfasst,
wobei die E-Achse (1) ein Schmiersystem (13) für die Übertragungskette umfasst, wobei das Schmiersystem (13) in Reihe mit einer der Antriebswellen (4', 4") platziert ist,
wobei eine der Antriebswellen (4', 4") einen ersten Abschnitt (4a) und einen zweiten Abschnitt (4b) beinhaltet, die starr miteinander verbunden sind, wobei der erste Abschnitt (4a) mit der Differenzialeinheit (8) verbunden ist, wobei das Schmiersystem (13) in dem ersten Abschnitt (4a) gemacht bzw. ausgeführt ist, wobei das Schmiersystem (13) zumindest ein Schmierrohr (20) beinhaltet, das intern zu bzw. innerhalb des ersten Abschnitts (4a) gemacht bzw. ausgeführt ist,
wobei das Schmierrohr (20) mit zumindest einer Schmierflüssigkeitsquelle (F) verbunden ist, wobei die Quelle (F) durch das Gehäuse (C) getragen ist, wobei das Schmierrohr (20) einen ersten Abzweig (20') und einen zweiten Abzweig (20") umfasst, wobei der erste Abzweig (20') fluidisch mit der Quelle (F) verbunden ist, wobei der zweite Abzweig (20") eine Mehrzahl von Schmierpunkte entlang einer Längsachse (A) des ersten Abschnitts (4a) definiert,
wobei das Schmiersystem (13) eine Mehrzahl von Schmierabzweigen (21) umfasst, die sich beginnend von dem zweiten Abzweig (20") radial erstrecken, wobei die Schmierabzweige (21) Schmierpunkte für die Elemente der Übertragungskette definieren, wobei die Schmierabzweige (21) und/oder das Schmierrohr (20) eine kalibrierte Drosselung definieren.

2. E-Achse/E-Träger nach Anspruch 1, wobei das Schmiersystem (13) in eine der Antriebswellen (4', 4") integriert ist.

3. E-Achse/E-Träger nach Anspruch 1 oder 2, ferner umfassend ein Übersetzungsverhältnis-Änderungssystem (6), das zwischen den Übertragungssystemen (5, 7) in Reihe angeordnet ist.

4. E-Achse/E-Träger nach einem der vorhergehenden Ansprüche, wobei sich der zweite Abzweig (20") entlang der Längsachse (A) des ersten Abschnitts (4a) erstreckt und an einem ersten Ende mit dem ersten Abzweig (20') verbunden ist und an einem zweiten Ende gegenüberliegend bzw. entgegengesetzt zu dem ersten Ende offen ist und dem Differenzialgetriebe (8) zugewandt ist.

5. E-Achse/E-Träger nach einem der vorhergehenden Ansprüche, wobei die Schmierabzweige (21) entlang der Längsachse (A) voneinander beabstandet sind.

6. E-Achse/E-Träger nach einem der vorhergehenden Ansprüche, wobei die Schmierabzweige (21) koplanar sind.

7. E-Achse/E-Träger nach einem der vorhergehenden Ansprüche, wobei die Schmierabzweige (21) auf derselben Seite in Bezug auf die Längsachse (A) platziert sind.

8. E-Achse/E-Träger nach einem der vorhergehenden Ansprüche, wobei die Schmierabzweige (21) und/oder das Schmierrohr (20) voneinander unterschiedliche Durchgangsabschnitte aufweisen.

9. E-Achse/E-Träger nach einem der vorhergehenden Ansprüche, wobei die elektrische Maschine (2) eine Arbeitswelle (2') antreibt, die durch das erste Übertragungssystem (5) betriebsmäßig mit einer Eingangswelle (15) verbunden ist, die durch eine der Antriebswellen (4', 4") frei drehbar getragen bzw. gelagert ist und über das Übersetzungsverhältnis-Änderungssystem (6) betriebsmäßig mit dem zweiten Übertragungssystem (7) verbunden ist, wobei das erste Übertragungssystem (5) ein Parallelwellen-Übertragungssystem ist, das zumindest einen Drehzahlsprung (5', 5") zwischen der Arbeitswelle (2') und der Eingangswelle (15) definiert.

10. E-Achse/E-Träger nach einem der vorhergehenden Ansprüche, wobei das zweite Übertragungssystem (7) Planetenräder aufweist, umfassend ein Sonnenrad (7'), eine Krone bzw. ein Kronenrad (7"') und eine Mehrzahl von Satelliten bzw. Satellitenrädern (7"), die zwischen dem Sonnenrad (7') und der Krone (7") eingreifen und durch einen Träger (7a) verbunden sind, wobei der Träger (7a) betriebsmäßig mit der Differenzialeinheit (8) verbunden ist.

11. E-Achse nach einem der vorhergehenden Ansprüche, abhängig von Anspruch 3, wobei das Übersetzungsverhältnis-Änderungssystem (6) konfiguriert ist, die Eingangswelle (15) mit einem des Sonnenrads (7') oder des Trägers (7a) zu verbinden oder die Eingangswelle (15) von dem zweiten Übertragungssystem (7) zu trennen.

12. E-Achse/E-Träger nach einem der vorhergehenden Ansprüche, wobei die Differenzialeinheit (8) eine Mehrzahl von Satelliten bzw. Satellitenrädern (8') beinhaltet, die durch das zweite Übertragungssystem (7) angetrieben werden und mit einem ersten und einem zweiten Kegelrad (8a, 8b) in Eingriff sind, die durch eine jeweilige Antriebswelle (4', 4") getragen sind.

13. E-Achse nach einem der vorhergehenden Ansprüche, umfassend ein Differenzialsperrsystem (11), das konfiguriert ist, die Drehmomentverteilungsfunktion der Differenzialeinheit (8) zu unterdrücken.

14. E-Achse/E-Träger nach einem der vorhergehenden Ansprüche, ferner umfassend Radnaben-Übertragungssysteme (9), die betriebsmäßig zwischen jedem Rad (3) und der jeweiligen Antriebswelle (4', 4") angeordnet sind.

15. E-Achse/E-Träger nach einem der vorhergehenden Ansprüche, ferner umfassend ein Feststellbremssystem (12), das konfiguriert ist, betriebsmäßig mit zumindest einem des zweiten Übertragungssystems (7) und/oder der Differenzialeinheit (8) zusammenzuwirken, um die Bewegung der E-Achse/des E-Trägers (1) zu blockieren.

16. E-Achse/E-Träger nach einem der vorhergehenden Ansprüche, umfassend ein System zum Trennen der Antriebswellen (4', 4").

17. Fahrzeug, das mit einer E-Achse/einem E-Träger nach einem der vorhergehenden Ansprüche versehen ist.

## Revendications

1. Essieu de traction électrique, essieu électrique/poutre électrique (1), pour un véhicule, l'essieu électrique/la poutre électrique (1) comprenant un carter (C) définissant un espace (V) séparé de l'environnement externe et au moins une machine électrique (2) et une paire d'arbres d'entraînement (4', 4") reliés chacun à une roue respective dudit véhicule et supportés par ledit carter (C), lesdits arbres d'entraînement (4', 4") étant coaxiaux avec un axe longitudinal (A),
ladite au moins une machine électrique (2) étant coaxiale avec un axe (B) parallèle audit et espacé dudit axe longitudinal (A),
ledit essieu électrique (1) comprenant une chaîne de transmission logée dans ledit espace (V) reliant de manière fonctionnelle ladite au moins une machine électrique (2) à ladite paire d'arbres d'entraînement (4', 4"),
ladite chaîne de transmission comprenant interposés en série de manière fonctionnelle entre ladite au moins une machine électrique (2) et ladite paire d'arbres d'entraînement (4', 4") un premier système de transfert (5), un second système de transfert (7) et une unité différentielle (8),
ledit essieu électrique (1) comprenant un système de lubrification (13) pour ladite chaîne de transmission, ledit système de lubrification (13) étant placé en série avec un desdits arbres d'entraînement (4', 4"),
dans lequel un desdits arbres d'entraînement (4', 4") comprend une première partie (4a) et une seconde partie (4b) reliées de manière rigide l'une à l'autre, ladite première partie (4a) étant reliée à ladite unité différentielle (8), ledit système de lubrification (13) étant réalisé dans ladite première partie (4a),
dans lequel ledit système de lubrification (13) comprend au moins un tuyau de lubrification (20) réalisé à l'intérieur de ladite première partie (4a),
dans lequel ledit tuyau de lubrification (20) est relié de manière fluidique à au moins une source (F) de fluide de lubrification, ladite source (F) étant portée par ledit carter (C), dans lequel ledit tuyau de lubrification (20) comprend une première branche (20') et une seconde branche (20''), ladite première branche (20') étant reliée de manière fluidique à ladite source (F), ladite seconde branche (20") définissant une pluralité de points de lubrification le long d'un axe longitudinal (A) de ladite première partie (4a),
dans lequel ledit système de lubrification (13) comprend une pluralité de branches de lubrification (21) s'étendant radialement en partant de ladite seconde branche (20"), lesdites branches de lubrification (21) définissant des points de lubrification pour lesdits éléments de ladite chaîne de transmission, lesdites branches de lubrification (21) et/ou ledit tuyau de lubrification (20) définissant une restriction calibrée.

2. Essieu électrique/poutre électrique selon la revendication 1, ledit système de lubrification (13) étant intégré dans un desdits arbres d'entraînement (4', 4").

3. Essieu électrique/poutre électrique selon la revendication 1 ou 2, comprenant en outre un système de changement de rapport de vitesse (6) interposé en série entre lesdits systèmes de transfert (5, 7).

4. Essieu électrique/poutre électrique selon l'une quelconque des revendications précédentes, dans lesquels ladite seconde branche (20") s'étend le long dudit axe longitudinal (A) de ladite première partie (4a) et est reliée à une première extrémité à ladite première branche (20') et à une seconde extrémité opposée à la première elle est ouverte et fait face à ladite unité différentielle (8).

5. Essieu électrique/poutre électrique selon l'une quelconque des revendications précédentes, dans lesquels lesdites branches de lubrification (21) sont espacées les unes des autres le long dudit axe longitudinal (A).

6. Essieu électrique/poutre électrique selon l'une quelconque des revendications précédentes, dans lesquels lesdites branches de lubrification (21) sont coplanaires.

7. Essieu électrique/poutre électrique selon l'une quelconque des revendications précédentes, dans lesquels lesdites branches de lubrification (21) sont placées sur le même côté par rapport audit axe longitudinal (A).

8. Essieu électrique/poutre électrique selon l'une des revendications précédentes, dans lesquels lesdites branches de lubrification (21) et/ou ledit tuyau de lubrification (20) ont des sections de passage différentes les unes des autres.

9. Essieu électrique/poutre électrique selon l'une des revendications précédentes, dans lesquels ladite machine électrique (2) entraîne un arbre d'actionnement (2') relié de manière fonctionnelle par ledit premier système de transfert (5) à un arbre d'entrée (15) porté d'une manière libre en rotation par un desdits arbres d'entraînement (4', 4") et relié de manière fonctionnelle audit second système de transfert (7) via ledit système de changement de rapport de vitesse (6), ledit premier système de transfert (5) étant un système de transfert à arbres parallèles définissant au moins un saut de vitesse (5', 5") entre ledit arbre d'actionnement (2') et ledit arbre d'entrée (15).

10. Essieu électrique/poutre électrique selon l'une des revendications précédentes, dans lesquels ledit second système de transfert (7) a des engrenages épicycloïdaux, comprenant un planétaire (7'), une couronne (7‴) et une pluralité de satellites (7") s'engrenant entre ledit planétaire (7') et ladite couronne (7‴) et reliés par un organe porteur (7a), ledit organe porteur (7a) étant relié de manière fonctionnelle à ladite unité différentielle (8).

11. Essieu électrique selon l'une des revendications précédentes dépendant de la revendication 3, dans lequel ledit système de changement de rapport de vitesse (6) est configuré pour relier ledit arbre d'entrée (15) à un parmi ledit planétaire (7') ou ledit organe porteur (7a) ou pour désolidariser ledit arbre d'entrée (15) dudit second système de transfert (7).

12. Essieu électrique/poutre électrique selon l'une des revendications précédentes, dans lesquels ladite unité différentielle (8) comprend une pluralité de satellites (8') entraînés par ledit second système de transfert (7) et s'engrenant avec une première et une seconde roue conique (8a, 8b) portées par un arbre d'entraînement (4', 4") respectif.

13. Essieu électrique selon l'une des revendications précédentes, comprenant un système de verrouillage du différentiel (11) configuré pour entraver la fonction de répartition de couple de ladite unité différentielle (8).

14. Essieu électrique/poutre électrique selon l'une des revendications précédentes, comprenant en outre des systèmes de transfert de moyeu de roue (9) interposés de manière fonctionnelle entre chaque roue (3) et l'arbre d'entraînement (4', 4") respectif.

15. Essieu électrique/poutre électrique selon l'une des revendications précédentes, comprenant en outre un système de frein de stationnement (12) configuré pour coopérer de manière fonctionnelle avec au moins un parmi le second système de transfert (7) et/ou l'unité différentielle (8) pour bloquer le mouvement dudit essieu électrique/de ladite poutre électrique (1).

16. Essieu électrique/poutre électrique selon l'une des revendications précédentes, comprenant un système pour la désolidarisation desdits arbres d'entraînement (4' , 4").

17. Véhicule pourvu d'un essieu électrique/d'une poutre électrique selon l'une des revendications précédentes.
